# EUROPEAN PATENT SPECIFICATION

(11) **EP 4 211 644 B1**
(45) Date of publication and mention of the grant of the patent: **25.09.2024**
(21) Application number: 21712833.9
(22) Date of filing: 19.03.2021
(51) Int. Cl.: G06T 3/00

(54) **DEVICE AND METHOD FOR VIDEO INTERPOLATION**
VORRICHTUNG UND VERFAHREN ZUR VIDEOINTERPOLATION
DISPOSITIF ET PROCÉDÉ D'INTERPOLATION VIDÉO

(30) Priority: 05.11.2020 WO PCT/EP2020/081132
(43) Date of publication of application: 19.07.2023
(73) Proprietor: Huawei Technologies Co., Ltd., Shenzhen, Guangdong 518129 (CN); UNIVERSITY OF ZURICH, 8006 Zürich (CH)
(72) Inventor: TULYAKOV, Stepan, 80992 Munich (DE); GEORGOULIS, Stamatios, 80992 Munich (DE); LI, Yuanyou, 80992 Munich (DE); GEHRIG, Daniel, 8050 Zürich (CH); ERBACH, Julius, 8050 Zürich (CH); GEHRIG, Mathias, 8050 Zürich (CH); SCARAMUZZA, Davide, 8050 Zürich (CH)
(74) Representative: Roth, Sebastian
(86) International application number: PCT/EP2021/057127
(87) International publication number: WO 2022/096158

(56) References cited:
- WO-A1-2020/150264
- WANG ZIHAO W ET AL: "Event-Driven Video Frame Synthesis", 2019 IEEE/CVF INTERNATIONAL CONFERENCE ON COMPUTER VISION WORKSHOP (ICCVW), IEEE, 27 October 2019 (2019-10-27), pages 4320 - 4329, XP033732705, DOI: 10.1109/ICCVW.2019.00532
- PRASAN A SHEDLIGERI ET AL: "Photorealistic Image Reconstruction from Hybrid Intensity and Event based Sensor", ARXIV.ORG, CORNELL UNIVERSITY LIBRARY, 201 OLIN LIBRARY CORNELL UNIVERSITY ITHACA, NY 14853, 16 May 2018 (2018-05-16), XP081421624
- GUILLERMO GALLEGO ET AL: "Event-based Vision: A Survey", ARXIV.ORG, CORNELL UNIVERSITY LIBRARY, 201 OLIN LIBRARY CORNELL UNIVERSITY ITHACA, NY 14853, 8 August 2020 (2020-08-08), XP081735140, DOI: 10.1109/TPAMI.2020.3008413
- KONSTAN JOSEPH A. ET AL: "Video summagator : an interface for video summarization and navigation", PROCEEDINGS OF THE 2012 ACM ANNUAL CONFERENCE ON HUMAN FACTORS IN COMPUTING SYSTEMS, CHI '12, 5 May 2012 (2012-05-05), New York, New York, USA, pages 647 - 650, XP055824074, ISBN: 978-1-4503-1015-4, Retrieved from the Internet <URL:https://dl.acm.org/doi/pdf/10.1145/2207676.2207767> DOI: 10.1145/2207676.2207767
- ELIAS MUEGGLER ET AL: "The Event-Camera Dataset and Simulator: Event-based Data for Pose Estimation, Visual Odometry, and SLAM", ARXIV.ORG, CORNELL UNIVERSITY LIBRARY, 201 OLIN LIBRARY CORNELL UNIVERSITY ITHACA, NY 14853, 26 October 2016 (2016-10-26), XP081350136, DOI: 10.1177/0278364917691115

## Description

### TECHNICAL FIELD

The present disclosure relates to the field of image and video processing. In particular, the disclosure is concerned with video interpolation, for instance, for slow motion video applications or low energy video acquisition. Embodiments of the invention propose a device and a method for video interpolation. The device and the method can be used to compute and insert one or more additional intermediate video frames into a captured video, wherein the intermediate frames are temporally arranged in-between the original video frames of the video. Thus, the temporal resolution of the video can be increased.

### BACKGROUND

Video interpolation can, for example, be used for enhancing a viewing experience in displays, or for generating slow motion videos in video recording devices. Exemplary video interpolation approaches can be divided into the following classes: approaches using a single video; approaches using multiple videos (also referred to as "hybrid systems"); and event-based approaches.

The single video approaches predict one or more intermediate frames between each pair of original frames of a video by using the pair of original frames or even their extended neighborhood. There are three exemplary methods that may be used for the single video frame interpolation approach: warping-based, kernel-based, and phase-based. The warping-based methods combine an optical flow estimation with image warping to generate intermediate frames in-between the frames of the original video. Thus, a warping-based interpolation is performed to obtain the intermediate frames. The kernel-based methods estimate pixel-wise convolutional kernels, which are applied to the frames of the original video to compute intermediate frames. The phase-based methods estimate a phase shift between the frames of the original video, and use the phase shift to compute the intermediate frames. However, single video approaches have the following problems. Firstly, they assume only a simple motion between the boundary frames (of the original video), and thus cannot handle a highly nonlinear motion. Further, they use a brightness constancy assumption, and thus they do not work well when the light or the camera focus changes.

The multiple video approaches fuse multiple videos with different properties to produce a new video with an increased frame rate. There are, in particular, two exemplary methods that may be used here: firstly, two (or more) cameras may be used with a different spatiotemporal resolution tradeoff; secondly, several cameras with staggered triggering time may be used. In the former case, in addition to a high spatial resolution video, the method captures a second video with a low resolution but with a higher frame rate, which is then used for motion estimation. In the latter case, the method captures multiple videos with evenly spaced trigger times, and then combines them into one video. However, the main problems of the multiple video approaches are high energy and memory requirements, and a bulkiness of the video acquisition system.

The event-based methods use an asynchronous sequence of events acquired by an event sensor for performing an interpolation of a video. Instead of measuring the intensity of every pixel in a fixed time interval, an event sensor reports events of significant pixel intensity changes. Every such event is represented by its position, sign of brightness change, and timestamp (accurate to the microsecond). Event sensors have a very high temporal resolution, and thus allow recovering precise object motion. There are, in particular, two exemplary methods that may be used: firstly, an event-based method, which reconstructs high speed videos from an event stream only; secondly, a frame- and event-based method that utilizes geometrically aligned event stream and fixed rate intensity frames from a Dynamic and Active-pixel Vision Sensor (DAVIS) camera for video interpolation. Polarities of the events arriving between the frames represent logarithmic brightness changes, and can be accumulated and aggregated to synthesize one or more intermediate frames. Thus, a synthesis-based interpolation is performed to obtain the intermediate frames. However, the main problems of the event-based methods are, firstly, that methods that rely only on the events are unstable and depend on the motion pattern, thus they cannot produce high-speed videos with correct global contras. Further, methods that rely on the events and the frames from the DAVIS camera fail to produce a high resolution color video, due to the low quality of the intensity frames.

### SUMMARY

In view of the above-mentioned problems and disadvantages, embodiments of the present invention aim to improve exemplary video interpolation approaches. An objective is to provide a device and a method for video interpolation, wherein the video interpolation does not suffer from the above-described problems and disadvantages. In particular, a goal is a device and method that produce high-speed color videos (having a high frame rate) with a correct global contrast. The device and method should also be able to handle highly nonlinear motion in the video. Another goal is that the video acquisition and interpolation are robust against light changes or focus changes. In addition, energy requirements, memory requirements, and bulkiness of the device that acquires and interpolates the video are desired to be low.

These and other objectives are achieved by the embodiments of the invention as described in the enclosed independent claims. Advantageous implementations of the embodiments of the invention are further defined in the dependent claims.

A first aspect of the disclosure provides a device for providing video interpolation, the device comprising: an image sensor configured to obtain a time sequence of frames including a first frame and a second frame obtained after the first frame; an event sensor configured to obtain a time sequence of events, wherein one or more events are obtained between the first frame and the second frame; wherein the image sensor and the event sensor are temporally synchronized and cover the same field of view; and a processor configured to combine a warping-based interpolation and a synthesis-based interpolation to compute an intermediate frame referring to a point in time between the first frame and the second frame, wherein the intermediate frame is based on the first frame, the second frame and the one or more events obtained between the first frame and the second frame.

The device of the first aspect enables a video interpolation of a video captured with the image sensor, wherein the video interpolation does not suffer from the problems and disadvantages described above with respect to the exemplary approaches. In particular, by combining the event sensor and the image sensor (e.g., a color sensor, like a high-quality RGB sensor), an interpolated video (particularly with increased frame rate) of much better quality can be produced than with the exemplary event-based approaches. The video can be a color video. Due to the event sensor and the warping-based interpolation also a highly nonlinear motion in the captured video can be handled by the device of the first aspect. Further, due to the event sensor and the synthesis-based interpolation, the video acquisition and its interpolation is very robust against light changes or focus changes, which may occur between the video frames of the sequence of frames. In addition, since the event sensor is low power, is compact, and may produce a sparse event stream with a small memory footprint, the device of the first aspect is much more efficient and compact than exemplary approaches using multiple sensors.

Due to the above advantages, the device of the first aspect is well suited for slow motion video applications. However, the device of the first aspect may also acquire normal motion videos with large energy savings. In particular, the device may to this end capture a low frame rate video with the image sensor (e.g. in the order of 5 to 10 frames per second included in the time sequence of frames) and may interpolate this captured video to a normal frame rate (e.g. 60 frames per second or more, after computing one or more intermediate frames) using the one or more events.

Another advantage of the device of the first aspect is that the video interpolation performs better in the presence of motion blur and non-rigid motion (such as smoke, water, objects with changing shape) than exemplary methods mentioned above.

Notably, the time sequence of frames may be a time sequence of video frames, i.e., of the captured video. The first frame and the second frame may be, respectively, a preceding frame and a subsequent frame in the time sequence of frames. In particular, these frames may be two adjacent frames in the time sequence of frames. Both the warping-based interpolation and the synthesis-based interpolation may be separately performed based on the first frame, the second frame, and the one or more events obtained temporally between the first frame and the second frame. The results of the two different interpolations may then be combined to obtain the intermediate frame.

The warping-based interpolation may generally include warping the first frame and the second frame, respectively, based on the one or more events to obtain the result. The synthesis-based interpolation may generally include synthesizing the first frame, second frame, and the one or more events to obtain the result. The device of the first aspect may perform the ssynthesis-based interpolation by accumulating brightness changes recorded by the one or more events between the first frame and a latent intermediate frame and between the second frame and the latent intermediate frame, respectively, and then applying these brightness changes to the first frame and the second frame, respectively. This may be done by the device of the first aspect using a synthesis network.

In an implementation form of the first aspect, the processor is configured to compute the intermediate frame based further on at least one of: one or more frames preceding the first frame in the time sequence of frames; one or more frames following the second frame in the time sequence of frames; one or more events in the time sequence of events obtained before the first frame; one or more events in the time sequence of events obtained after the second frame.

In this way, the interpolation of the intermediate frame, in particular its accuracy, can be further improved.

In an implementation form of the first aspect, for computing the intermediate frame the processor is configured to: perform the warping-based interpolation to obtain a warping-based estimate for the intermediate frame, wherein the warping-based interpolation includes warping the first frame based on a motion estimate between the first frame and a latent intermediate frame and warping the second frame based on a motion estimate between the latent intermediate frame and the second frame, the motion estimates being determined based on the one or more events obtained between the first frame and the second frame.

The latent intermediate frame is the yet non-existent intermediate frame (i.e., defined by the point in time, at which the intermediate frame will be inserted into the video), which is to be computed by the processor during the video interpolation. The motion estimate may be an optical flow, which may refer to pixel-wise shift between the first frame and second frame. The motion estimate may include non-linear motion.

In an implementation form of the first aspect, for computing the intermediate frame the processor is configured to: perform the synthesis-based interpolation to obtain a synthesis-based estimate for the intermediate frame, wherein the synthesis-based interpolation includes synthesizing a latent intermediate frame using the first frame, the second frame, and the one or more events obtained between the first frame and the second frame.

The latent intermediate frame used for the synthesis-based interpolation may be the same as the latent intermediate frame used for the warping-based interpolation.

In an implementation form of the first aspect, for computing the intermediate frame the processor is configured to: compute the intermediate frame based on the warping-based estimate and the synthesis-based estimate.

In this way, the intermediate frame can be obtained by combining or fusing the two separately obtained estimates, i.e., by combining the warping-based interpolation and the synthesis-based interpolation. Thus, the benefits of the two different interpolation methods are beneficially combined.

In an implementation form of the first aspect, for computing the intermediate frame the processor is further configured to: convert the time sequence of events into a discrete voxel grid; and perform the warping-based interpolation and/or the synthesis-based interpolation based on the voxel grid.

Using the voxel grid, instead of the raw sequence of events, may simplify the warping-based interpolation and/or the synthesis-based interpolation performed by the processor.

In an implementation form of the first aspect, the processor is further configured to: determine a residual motion estimate between the warping-based estimate and the synthesis-based estimate; perform a warping-refinement to obtain a refined warping-based estimate based on the warping-based estimate and the residual motion estimate; and compute the intermediate frame based on the refined warping-based estimate and the synthesis-based estimate.

Thus, a more precise warping-based estimate can be obtained, and accordingly also the interpolation of the intermediate frame can be improved.

In an implementation form of the first aspect, for performing the warping-based interpolation the processor is configured to: warp the first frame based on the one or more events obtained between the first frame and the latent intermediate frame in the time sequence of events; and warp the second frame based on the one or more events obtained between the latent intermediate frame and the second frame in a computed reversed time sequence of events.

In an implementation form of the first aspect, for obtaining the intermediate frame based on the warping-based estimate and the synthesis-based estimate the processor is further configured to: blend the warping-based estimate and/or the refined warping-based estimate with the synthesis-based estimate based on one or more blending coefficients determined based on the warping-based estimate, the synthesis-based estimate, the motion estimate between the first frame and the second frame, and a time between the first frame and the latent intermediate frame.

In this way, an efficient warping-based interpolation can be carried out by the processor of the device.

In an implementation form of the first aspect, the processor is further configured to: use an attention network to blend the warping-based estimate and/or refined warping-based estimate with the synthesis-based estimate, wherein the warping-based estimate, the synthesis-based estimate, the motion estimate between the first frame and the second frame, and the time between the first frame and the latent intermediate frame are input into the attention network.

In particular, the attention network may compute blending weights that may be used for blending the warping-based estimate and the synthesis-based estimate. In this way, the warping-based interpolation results and the synthesis-based interpolation results can be optimally combined to obtain the intermediate frame.

In an implementation form of the first aspect, the processor is further configured to use a convolutional neural network to compute the intermediate frame.

In an implementation form of the first aspect, the processor is further configured to use a U-Net for performing at least one of: the warping-based interpolation; the synthesis-based interpolation; the warping-refinement; the blending of the warping-based estimate and/or the refined warping-based estimate with the synthesis-based estimate.

In an implementation form of the first aspect, the processor is further configured to: compute the intermediate frame based on a frame-based interpolation with a decreased frame rate, if the event sensor is unavailable; and/or stop all operations and output an error indication, if the image sensor is unavailable.

Thus, a fallback option is provided for the device of the first aspect.

In an implementation form of the first aspect, the processor is further configured to: compute the intermediate frame while the image sensor and the event sensors obtain the time sequence of frames and the time sequence of events, respectively; and/or store the obtained time sequence of frames and time sequence of events in a raw file format and compute the intermediate frame based on the stored raw file format.

Thus, the video interpolation can be performed online or offline by the processor of the device.

In an implementation form of the first aspect, the processor is further configured to: compute a set of intermediate frames between the first frame and the second frame, based on the first frame, the second frame, and the one or more events obtained between the first frame and the second frame.

That is, one or more intermediate frames (i.e. the set of frames) may be computed between the first frame and the second frame. The more intermediate frames are interpolated between these boundary frames, the higher the frame rate of the resulting interpolated video may be.

In an implementation form of the first aspect, the processor is further configured to: determine a number of intermediate frames in the set of intermediate frames based on a motion estimate between the first frame and the second frame.

That is, depending on the motion estimate, more intermediate frames or fewer intermediate frames may be computed. In the absence of motion, the frame rate may even fall back to the frame rate of the image sensor, i.e., of the sequence of frames. In this case, even no intermediate frame may be computed between the two frames. Else, generally speaking, the number of intermediate frames between the first frame and the second frame may be smaller if there is less motion, and may be higher if there is more motion.

In an implementation form of the first aspect, the processor is further configured to: determine a number of intermediate frames in the set of intermediate frames based on a user input received by the device.

Thus, the user can set a desired frame rate of the interpolated video, or any part of the interpolated video. The user may also specify different frame rates for different parts of the interpolated video. The user of the device may arbitrarily increase or decrease the frame rate in any part of the interpolated video.

In an implementation form of the first aspect, the processor is further configured to: compute one or more intermediate frames between each two consecutively obtained frames in the time sequence of frames.

Thus, the frame rate of the video captured by the image sensor can be increased to obtain the interpolated video.

In an implementation form of the first aspect, the second frame directly follows the first frame in the time sequence of frames.

In other words, the first frame and the second frame may be adjacent video frames in the time sequence of frames.

In an implementation form of the first aspect, the event sensor is integrated with the image sensor, or the event sensor is arranged in a stereo configuration with the image sensor, or the event sensor and the image sensor are coupled to a beam splitter of the device.

In an implementation form of the first aspect, the image sensor comprises a color sensor or an RGB sensor.

For instance, a sensor of a high-quality RGB camera may be used as the image sensor. Of course, also a black and white sensor is possible.

A second aspect of the disclosure provides a method for video interpolation, the method comprising: obtaining a time sequence of frames including a first frame and a second frame obtained after the first frame; obtaining a time sequence of events, wherein one or more events are obtained between the first frame and the second frame; wherein the obtaining of the time sequence of frames and the time sequence of events is temporally synchronized and performed for the same field of view; and combining a warping-based interpolation and a synthesis-based interpolation to compute an intermediate frame referring to a point in time between the first frame and the second frame, wherein the intermediate frame is based on the first frame, the second frame, and the one or more events obtained between the first frame and the second frame.

In an implementation form of the second aspect, computing the intermediate frame is based further on at least one of: one or more frames preceding the first frame in the time sequence of frames; one or more frames following the second frame in the time sequence of frames; one or more events in the time sequence of events obtained before the first frame; one or more events in the time sequence of events obtained after the second frame.

In an implementation form of the second aspect, for computing the intermediate frame the method comprises: performing the warping-based interpolation to obtain a warping-based estimate for the intermediate frame, wherein the warping-based interpolation includes warping the first frame based on a motion estimate between the first frame and a latent intermediate frame and warping the second frame based on a motion estimate between the latent intermediate frame and the second frame, the motion estimates being determined based on the one or more events obtained between the first frame and the second frame.

In an implementation form of the second aspect, for computing the intermediate frame the method comprises: performing the synthesis-based interpolation to obtain a synthesis-based estimate for the intermediate frame, wherein the synthesis-based interpolation includes synthesizing a latent intermediate frame using the first frame, the second frame, and the one or more events obtained between the first frame and the second frame.

In an implementation form of the second aspect, for computing the intermediate frame the method comprises: computing the intermediate frame based on the warping-based estimate and the synthesis-based estimate.

In an implementation form of the second aspect, for computing the intermediate frame the method comprises: converting the time sequence of events into a discrete voxel grid; and performing the warping-based interpolation and/or the synthesis-based interpolation based on the voxel grid.

In an implementation form of the second aspect, the method comprises: determining a residual motion estimate between the warping-based estimate and the synthesis-based estimate; performing a warping-refinement to obtain a refined warping-based estimate based on the warping-based estimate and the residual motion estimate; and computing the intermediate frame based on the refined warping-based estimate and the synthesis-based estimate.

In an implementation form of the second aspect, for performing the warping-based interpolation the method comprises: warping the first frame based on the one or more events obtained between the first frame and the latent intermediate frame in the time sequence of events; and warping the second frame based on the one or more events obtained between the latent intermediate frame and the second frame in a computed reversed time sequence of events.

In an implementation form of the second aspect, for obtaining the intermediate frame based on the warping-based estimate and the synthesis-based estimate the method comprises: blending the warping-based estimate and/or the refined warping-based estimate with the synthesis-based estimate based on one or more blending coefficients determined based on the warping-based estimate, the synthesis-based estimate, the motion estimate between the first frame and the second frame, and a time between the first frame and the latent intermediate frame.

In an implementation form of the second aspect, the method further comprises: using an attention network to blend the warping-based estimate and/or refined warping-based estimate with the synthesis-based estimate, wherein the warping-based estimate, the synthesis-based estimate, the motion estimate between the first frame and the second frame, and the time between the first frame and the latent intermediate frame are input into the attention network.

In an implementation form of the second aspect, the method comprises using a convolutional neural network to compute the intermediate frame.

In an implementation form of the second aspect, the method comprises using a U-Net for performing at least one of the warping-based interpolation; the synthesis-based interpolation; the warping-refinement; the blending of the warping-based estimate and/or the refined warping-based estimate with the synthesis-based estimate

In an implementation form of the second aspect, the method comprises: computing the intermediate frame based on a frame-based interpolation with a decreased frame rate, if the event sensor is unavailable; and/or stop all operations and output an error indication, if the image sensor is unavailable.

In an implementation form of the second aspect, the method further comprises: computing the intermediate frame while the image sensor and the event sensors obtain the time sequence of frames and the time sequence of events, respectively; and/or storing the obtained time sequence of frames and time sequence of events in a raw file format and compute the intermediate frame based on the stored raw file format.

In an implementation form of the second aspect, the method further comprises: computing a set of intermediate frames between the first frame and the second frame, based on the first frame, the second frame, and the one or more events obtained between the first frame and the second frame.

In an implementation form of the second aspect, the method further comprises: determining a number of intermediate frames in the set of intermediate frames based on a motion estimate between the first frame and the second frame.

In an implementation form of the second aspect, the method further comprises: determining a number of intermediate frames in the set of intermediate frames based on a user input received by the device.

In an implementation form of the second aspect, method further comprises: computing one or more intermediate frames between each two consecutively obtained frames in the time sequence of frames.

In an implementation form of the second aspect, the second frame directly follows the first frame in the time sequence of frames.

In an implementation form of the second aspect, the time sequence of frames is obtained by an image sensor and the time sequence of frames is obtained by an event sensor; wherein the event sensor is integrated with the image sensor, or the event sensor is arranged in a stereo configuration with the image sensor, or the event sensor and the image sensor are coupled to a beam splitter of the device.

In an implementation form of the second aspect, the image sensor comprises a color sensor or an RGB sensor.

The method of the second aspect and its implementation forms achieve the same advantages and effects as the device of the first aspect and its respective implementation forms.

A third aspect of the disclosure provides a computer program comprising a program code for performing the method according to second aspect or any of its implementation forms, when executed on a computer.

A fourth aspect of the disclosure provides a non-transitory storage medium storing executable program code which, when executed by a processor, causes the method according to the second aspect or any of its implementation forms to be performed.

In summary of the above aspects and implementation forms describing embodiments of the invention, the present disclosure proposes to use an image sensor (e.g., of a high-quality RGB camera) and an integrated or auxiliary event sensor, in order to perform a high-quality video motion interpolation, i.e., to obtain a high frame rate interpolated video. In comparison to the exemplary frame-based single video interpolation approaches, which rely on brightness constancy and motion linearity assumptions, embodiments of the invention are adapted to estimate real motion, as well as real changes in focus and light conditions between each pair of frames, by using the event sensor. In particular, one or more high-fidelity intermediate frames may be computed between each pair of original video frames.

### BRIEF DESCRIPTION OF DRAWINGS

The above described aspects and implementation forms will be explained in the following description of specific embodiments in relation to the enclosed drawings, in which
- FIG. 1: shows a device for video interpolation according to an embodiment of the invention.
- FIG. 2: shows possible configurations of an image sensor and an event sensor of a device according to an embodiment of the invention.
- FIG. 3: shows schematically a video interpolation, as it may be performed by a device according to an embodiment of the invention.
- FIG. 4: shows an exemplary video interpolation performed by a device according to an embodiment of the invention.
- FIG. 5: shows an exemplary backbone network architecture, as it may be used by a device according to an embodiment of the invention to perform a video interpolation.
- FIG. 6: shows an exemplary transformation of a (discrete-continuous) sequence of events into a (discrete) voxel grid, as it may be performed by a device according to an embodiment of the invention.
- FIG. 7: shows a warping-based interpolation of an intermediate frame, as it may be performed by a device according to an embodiment of the invention.
- FIG. 8: shows an exemplary event sequence reversal process, as it may be performed by a device according to an embodiment of the invention.
- FIG. 9: shows a synthesis-based interpolation of an intermediated frame, as it may be performed by a device according to an embodiment of the invention.
- FGI. 10: shows a warping-based refinement of a warping-based estimate of an intermediate frame, as it may be performed by a device according to an embodiment of the invention.
- FIG. 11: shows an attention-based averaging of a warping-based estimate and a synthesis-based estimate of an intermediated frame, as it may be performed by a device according to an embodiment of the invention.
- FIG. 12: shows an exemplary conversion of a video dataset into a hybrid dataset.
- FIG. 13: shows an exemplary behavior of a device according to an embodiment of the invention in case that the event sensor or the image sensor is unavailable.
- FIG. 14: shows an exemplary frame rate of a video obtained by video interpolation performed by a device according to an embodiment of the invention, wherein the frame rate depends on the amount of motion between the frames produced by the image sensor.
- FIG. 15: shows an exemplary frame rate of a video obtained by video interpolation performed by a device according to an embodiment of the invention, wherein the frame rate depends on a user input.
- FIG. 16: shows a flow-diagram of a method for video interpolation according to an embodiment of the invention.

### DETAILED DESCRIPTION OF EMBODIMENTS

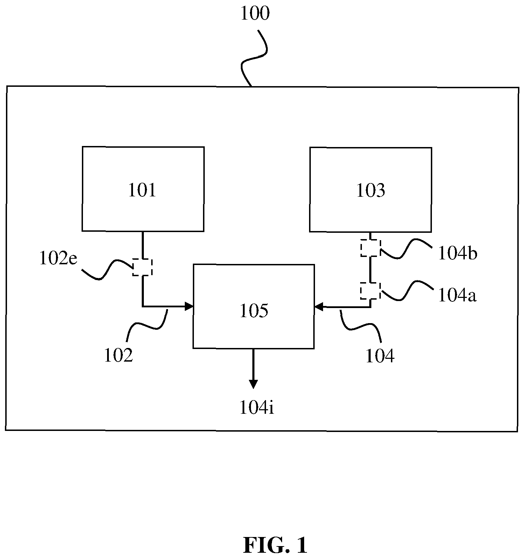

FIG. 1 shows a device 100 according to an embodiment of the invention. The device 100 is configured to provide or perform a video interpolation. The device 100 may be a processing unit of a camera, or smartphone, or tablet, or the like. The device 100 is configured to obtain a time sequence of frames 104, wherein the frames may be video frames. The time sequence of frames 104 may correspond to a captured video, which the device is configured to interpolate to increase the frame rate. The device 100 is, to this end, configured to compute one or more intermediate frames 104i arranged between, respectively, one or more pairs of a first frame 104a and a second frame 104b in the time sequence of frames 104. The first frame 104a and the second frame 104b may be subsequent frames in the time sequence of frames 104. Each intermediate frame 104i may be computed based on a corresponding first frame 104a and second frame 104b of the time sequence of frames 104.

The device 100 comprises an image sensor 103 - e.g., a sensor of a high-quality RGB camera (i.e., an RGB sensor) - an event sensor 101, and a processor 105.

The image sensor 103 is configured to obtain the time sequence of frames 104, which comprises a plurality of consecutive (video) frames, and particularly includes the first frame 104a and the second frame 104b obtained after the first frame 104a. For example, the first frame 104a and the second frame 104b may be two frames that directly follow each other in the time sequence of frames 104, i.e., they may be temporally adjacent to another. The image sensor 103 may be an RGB sensor, for instance, as known from the prior art.

The event sensor 101 is configured to obtain the time sequence of events 102, wherein one or more events 102e are obtained temporally between the first frame 104a and the second frame 104b. The event sensor 101 may have a plurality of pixels, wherein each pixel, or each of several pixel groups, may be configured to generate an event, for instance, if a detected light intensity at the pixel or pixel group changes, in particular, changes stronger than a determined threshold. The event sensor 101 may be an event sensor as it is known from the prior art.

The processor 105 of the device 100 may be part of processing circuitry of the device 100, wherein the processing circuitry may generally be configured to perform, conduct or initiate various operations of the device 100 described in this disclosure. The processing circuitry may comprise hardware and/or may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multipurpose processors. The device 100 may further comprise memory circuitry, which stores one or more instruction(s) that can be executed by the processor 105 or generally the processing circuitry, in particular, under control of the software. For instance, the memory circuitry may comprise a non-transitory storage medium storing executable software code which, when executed by the processor 105 or processing circuitry, causes various operations of the device 100 to be performed. In one embodiment, the processing circuitry comprises the processor 105 (and potentially one or more additional processors) and a non-transitory memory connected to the processor(s) 105. The non-transitory memory may carry executable program code which, when executed by the processor(s) 105, causes the device 100 to perform, conduct or initiate the operations or methods described in this disclosure.

In particular, with reference to FIG. 1, the processor 105 is configured to compute at least one intermediate frame 104i, which refers to (and is in the end located at) a time point between the first frame 104a and the second frame 104b. The computation is performed by combining a warping-based interpolation and a synthesis-based interpolation, and the intermediate frame 104i is based on the first frame 104a, the second frame 104b, and the one or more events 102e, which are obtained by the event sensor 101 between (referring to a point in time) the first frame 104a and the second frame 104b.

The video interpolation can be performed by the processor 105 of the device 100 during or after the video acquisition (i.e., the capturing of the time sequence of frames 104 by the image sensor 103). For the latter case, the time sequence of events 102 and the time sequence of frames 104, as obtained by the image sensor 103 and the event sensor 101, may be stored by the device 100 (e.g., in a memory coupled to the processor 105) in a raw file format, and the video interpolation may then be performed by the processor 105 based on the stored raw file format.

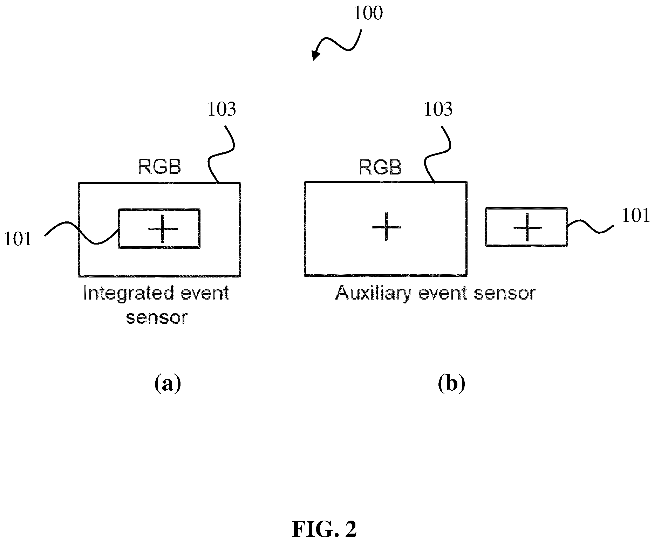

FIG. 2 shows possible implementations and configurations of the image sensor 103, in FIG. 2 exemplarily an RGB sensor, and the event sensor 101, respectively. In particular, the event sensor 101 may be integrated with the image sensor 103 (as shown in FIG. 2(a)), or may be used in addition to the image sensor 103 (i.e., as an auxiliary event sensor) as shown in FIG. 2(b)). In the latter case, the event sensor 101 may be arranged in a stereo configuration with the image sensor 103. Alternatively, the event sensor 101 and the image sensor 103 can be coupled to a beam splitter of the device 100.

As an example, the sequence of frames 104 from an RGB sensor, being the image sensor 103, may be used for the video interpolation, as well as the sequence of events 102 from the event sensor 101. The event sensor 101 may be geometrically aligned with the RGB sensor 103. The RGB sensor 103 and the event sensor 101 are temporally synchronized and optically aligned, i.e., they cover the same field of view and may have the same focus.

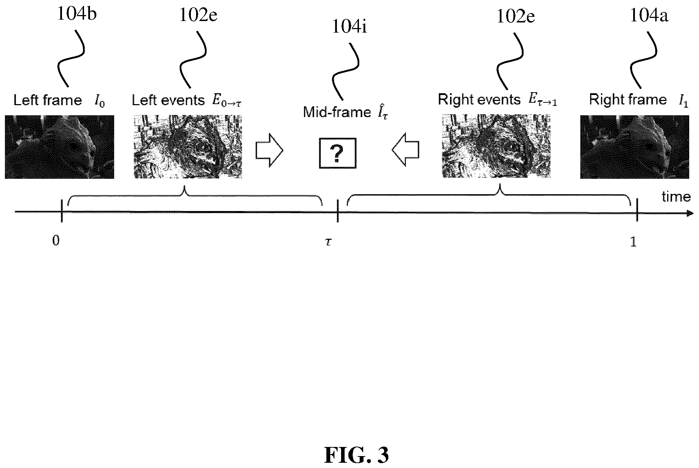

FIG. 3 shows schematically a video interpolation concept, as it may be performed by the processor 105 of the device 100 according to an embodiment of the invention, for instance, of the device 100 illustrated in FIG. 1. In order to interpolate the one or more intermediate frame(s) 104i between a pair of a first frame 104a and a second frame 104b of the time sequence of frames 104 (e.g., an RGB video captured by a color sensor), the one or more events 102e in the time sequence of events 102, which arrive temporally between the first frame 104a and the second frame 104b, may be used by the processor 105 of the device 100. At least one intermediate frame 104i may be computed referring in time to the middle between the first frame 104a and the second frame 104b. In particular, the processor 105 may warp the first frame 104a based on a first set of the one or more events 102e (between the latent intermediate frame and the first frame 104a), and may warp the second frame 104b based on a second set of the one or more events 102e (between the latent intermediate frame and the second frame 104b).

As mentioned above, for performing the video interpolation, particularly to compute the intermediate frame 104i, the processor 105 of the device 100 may be generally configured to perform and combine the warping-based interpolation and the synthesis-based interpolation.

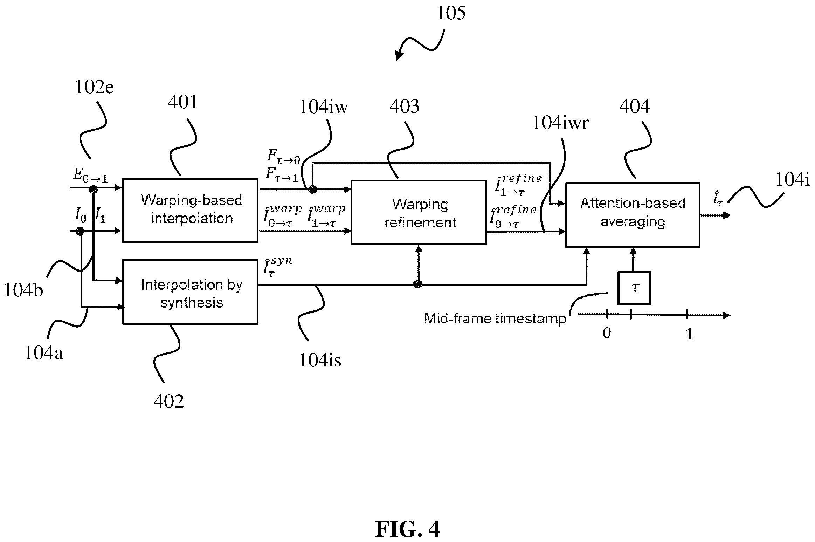

In particular, with reference to FIG. 4, the processor 105 of the device 100 may be configured to perform the warping-based interpolation 401 to obtain a warping-based estimate 104iw for the intermediate frame 104i. The warping-based interpolation 401 may include warping the first frame 104a based on a motion estimate between the first frame 104a and the latent intermediate frame, and warping the second frame 104b based on a motion estimate between the latent intermediate frame and the second frame 104b. The motion estimates may be determined based on the one or more events 102e obtained, respectively, between the latent intermediate frame and the first frame 104a and the second frame 104b.

Further, the processor 105 may be configured to perform the synthesis-based interpolation 402 to obtain a synthesis-based estimate 104is for the intermediate frame 104i. The synthesis-based interpolation 402 may include synthesizing the latent intermediate frame using the first frame 104a, the second frame 104b, and the one or more events 102e obtained between the first frame 104a and the second frame 104b.

Further, the processor 105 may be configured to compute the intermediate frame 104i based on the warping-based estimate 104iw and the synthesis-based estimate 104is.

FIG. 4 shows a specific example how the video interpolation can be performed by the processor 105 by combining the warping-based interpolation 401 and the synthesis-based interpolation 402. In particular, the processor 105 may separately perform the warping-based interpolation 401 and the synthesis-based interpolation 402. Then it may further refine the warping-based interpolation 401 by performing a warping refinement 403. Then, the processor 105 may combine the results of the warping refinement 403, i.e., a refined warping-based estimate 104iwr, and the synthesis-based estimate 104is (and optionally also the un-refined warping-based estimate 104iw) by performing averaging 404, particularly, by performing an attention-based averaging 404. This yields the intermediate frame 104i at, for instance, the mid-frame timestamp (in this exemplary case, the intermediate frame 104i is temporally in the middle between the first frame 104a and the second frame 104b.

Accordingly, as shown in FIG. 4, the video interpolation performed by the processor 105 may be considered to include four modules. The warping-based interpolation 401 (1^{st} module), the warping refinement 403 (3^{rd} module) to improve the warping-based estimate 104iw by computing residual flow, the synthesis-based interpolation 402 (2^{nd} module), and the attention-based averaging 404 (4^{th} module), which optimally combines the warping-based and fusion-based estimates 104iw, 104iwr, 104is.

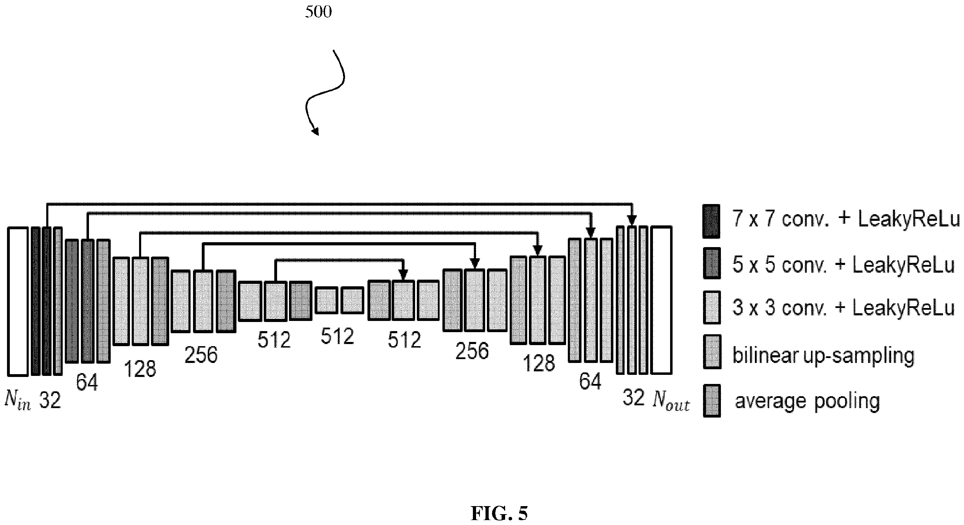

More detailed exemplary implementations are described below for each module. Each module may be based on the same backbone architecture, e.g., an architecture 500 (U-Net) as shown in FIG. 5. In particular, the architecture 500 illustrated in FIG. 5 is an hourglass network with shortcut connections between the contracting and the expanding parts.

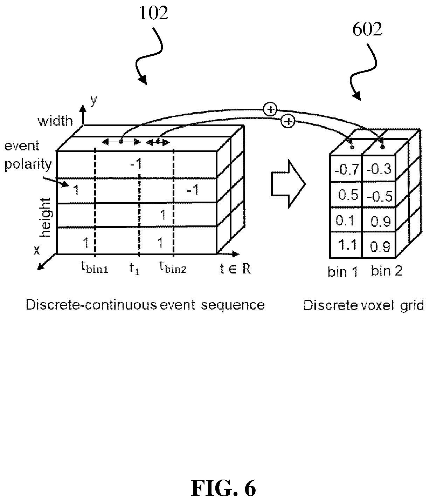

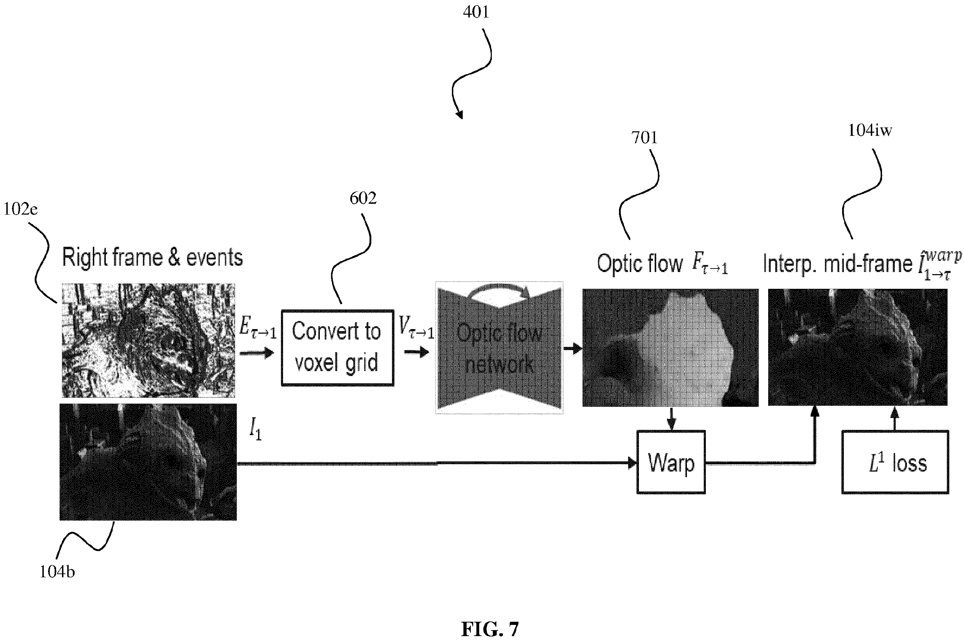

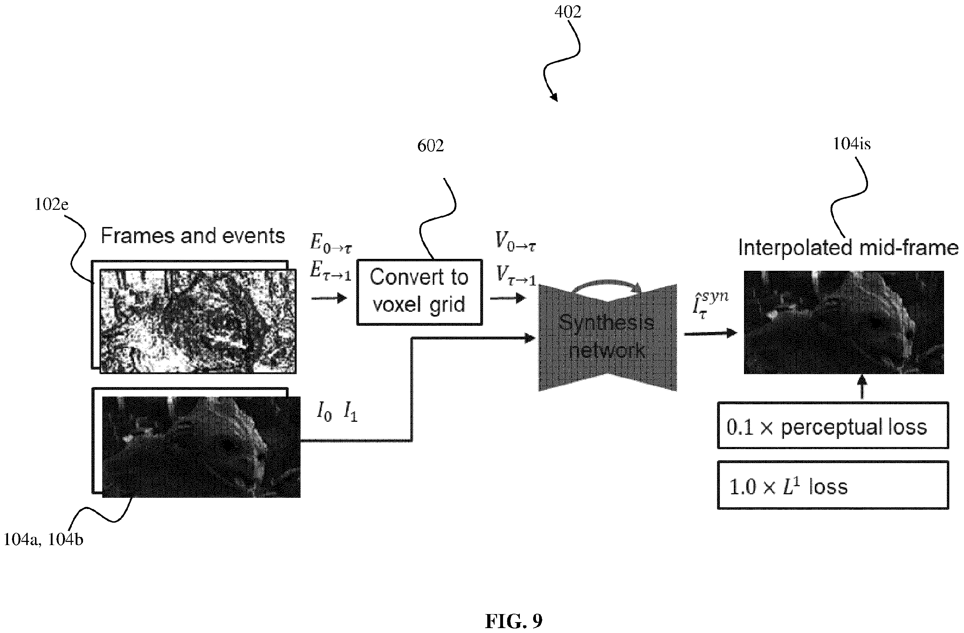

For operations in each of the four modules, a (discrete) voxel grid 602 representation of the event sequence 102 may be used, as shown in FIG. 6. For instance, the time sequence of events is converted to a voxel grid 602 in FIG. 7 (warping-based interpolation 401) or in FIG. 9 (synthesis-based interpolation 402). To compute the voxel grid 602, as shown in FIG. 6, the time interval of the (discrete-continuous) event sequence 102 may be divided by the processor 105 into fixed duration bins, and a polarity of each event 102e may be added to two closest temporal bins according to distance to centers of the bins.

FIG. 7 shows possible details of the warping-based interpolation 401, as it may be performed by the processor 105 of the device 100. For the warping-based interpolation 401, the processor 105 may estimate motion between the first frame 104a and the second frame 104b, respectively, and the latent intermediate frame. The resulting motion estimates 701 may be obtained based on the one or more events 102e arriving between the first frame 104a (the one or more events 102e can first be converted to the voxel grid 602) and the second frame 104b, respectively, and warping each of the two frames 104a, 104b towards the latent intermediate frame. A main difference of the warping-based interpolation 401 performed by the device 100 compared to exemplary approaches is that the exemplary approaches estimate a motion between pairs of frames and interpolate it to a middle frame, whereby they rely on a motion linearity assumption. The warping-based interpolation 401 performed by the processor 105 of the device 100 may estimate the motion estimate 701 from the event sequence 102, and thus can handle also non-linear motion.

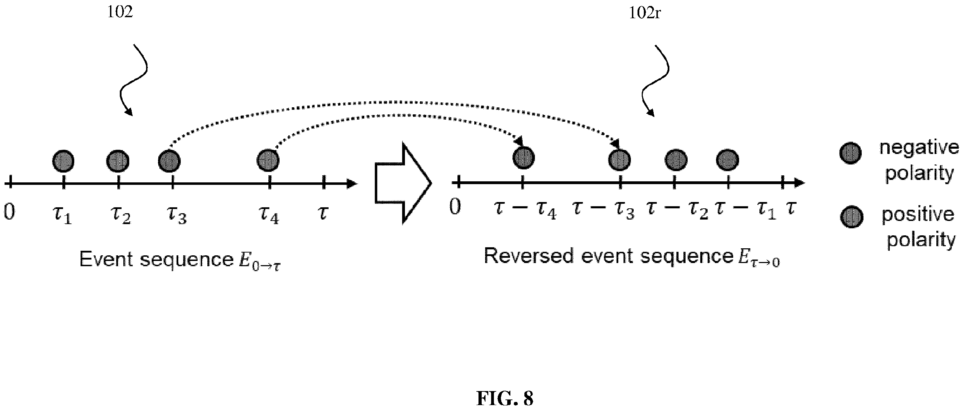

In particular, the warping-based interpolation 401 may estimate optical flows (as the motion estimate 701) between the latent intermediated frame and each of the boundary frames (i.e. the first frame 104a and the second frame 104b), respectively, and may use these optical flows to separately warp the boundary frames 104a, 104b towards the intermediate position (latent intermediate frame) using differentiable interpolation, in order to produce two intermediate frame estimates. Notably, FIG. 7 shows how to interpolate the intermediate frame estimate 104iw using the second frame 104b. To interpolate the intermediate frame estimate 104iw using the first frame 104a, the same procedure may be used based on an optical flow network to obtain the motion estimate 701, with the difference that the event sequence 102 may be reversed before the processing. The reversing may be performed by the processor 105 using an event reversal module as shown exemplarily in FIG. 8.

The advantage of the warping-based interpolation 401 taken alone is that it does not pass an image through the network, and does not distort the edges and textures. However, if taken alone, it depends on the quality of the motion estimate 701, and cannot handle light and focus changes, occluded areas and new object appearing between boundary frames.

FIG. 9 shows possible details of the synthesis-based interpolation 402. For the synthesis-based interpolation 402, the processor 105 of the device 100 may be configured to integrate the one or more events 102e between the first frame 104a and the second frame 104b, respectively, and the latent intermediate frame. Thus, this module can change illumination, focus, and can also handle new objects appearing between the boundary frames 104a, 104b.

The interpolation 402, e.g. by using a synthesis network, may directly regress the latent intermediate frame and the two boundary frames (i.e., the first frame 104a and the second frame 104b) and the events 102e (which may first be converted into the voxel grid 602) as shown in FIG. 9. An advantage of this method taken alone is that it can handle light and focus changes and new object appearing in the frame, because it does not rely on brightness constancy assumption. Its main drawback if it would be taken alone, would be that it may distorts image edges and textures.

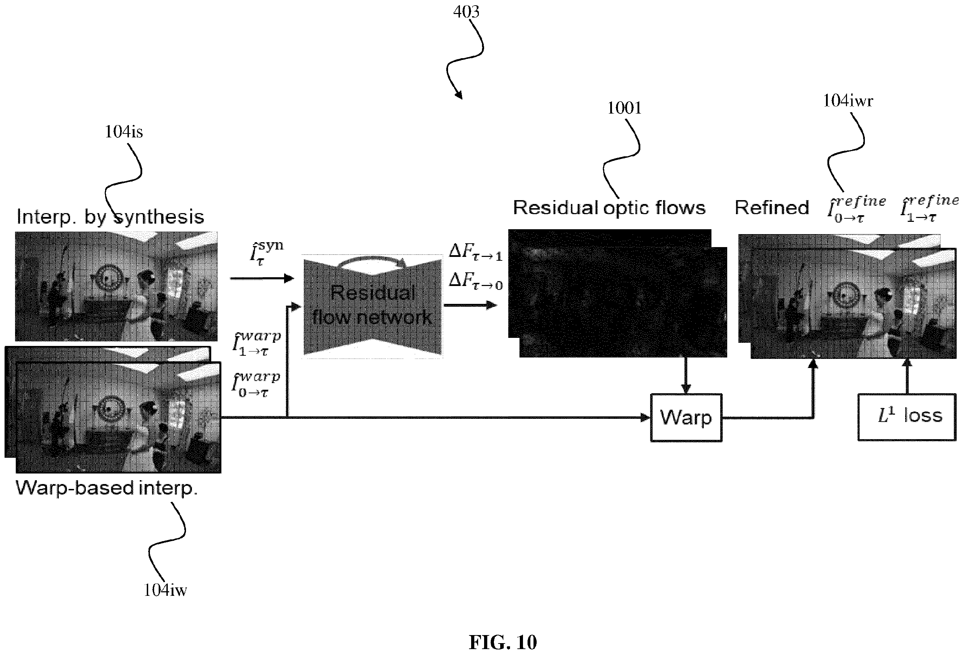

FIG. 10 shows possible details of the warping refinement 403. The processor 105 of the 100 may be further configured to perform the warping refinement 403 to refine the warping-based estimate 104iw. In particular, the processor 105 of the device 100 may be configured to determine a residual motion estimate 1001 between the warping-based estimate 104iw and the synthesis-based estimate 104is, and to obtain a refined warping-based estimate 104iwr based on the warping-based estimate 104iw and the residual motion estimate 1001. The processor 105 may accordingly configured to compute the intermediate frame 104i based on the refined warping-based estimate 104iwr and the synthesis-based estimate 104is, or (as shown) based on the refined warping-based estimate 104iwr, the warping-based estimate 104iw, and the synthesis-based estimate 104is

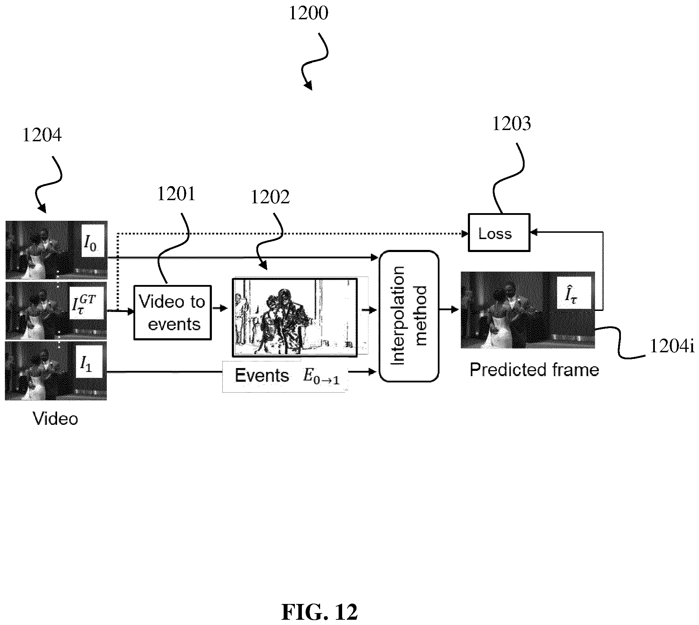

In particular, the warping-based refinement 403 may compute a refined intermediate frame estimate 104iwr by estimating residual optical flows (as the motion estimate 1001, for instance, using a residual flow network) between the warping-based interpolation results 104iw and the synthesis-based result 104is, and the warping interpolation results 104iw for the second time, as shown in Figure 12. The refinement module may be inspired by success of optical flow (disparity) refinement modules and by the observation that the synthesis-based interpolation result 104is is usually perfectly aligned with a ground truth intermediate frame.

Besides computing the residual motion estimate 1001, this module may also perform in-painting of occluded areas by filling them with values from near-by areas.

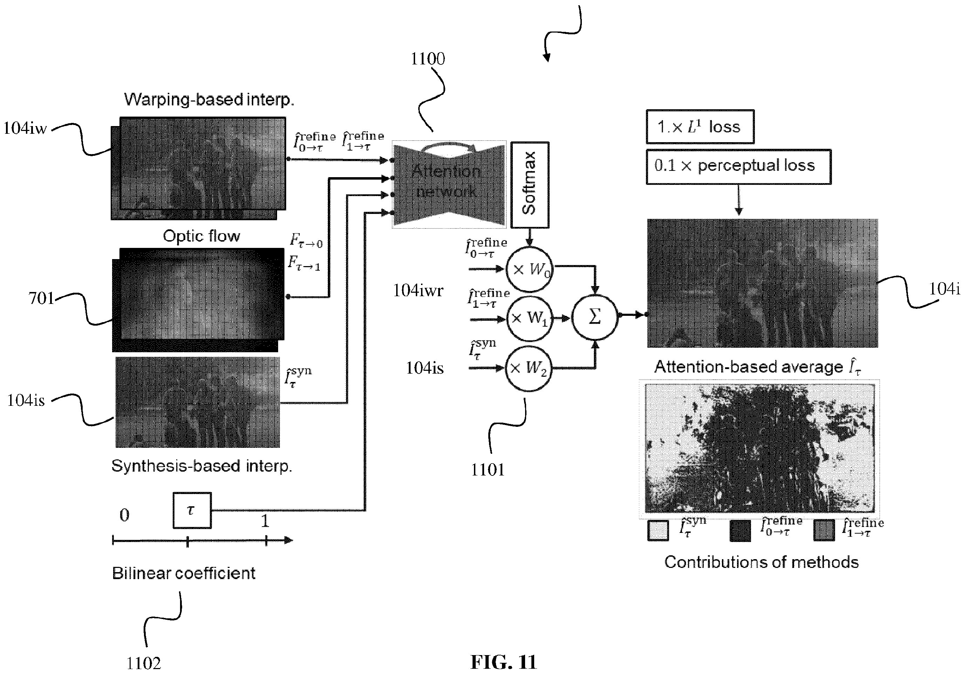

FIG. 11 shows possible details of the averaging 404. The processor 105 of the device 100 may be further configured to perform the attention-based averaging 404 to compute the intermediate frame 104i based on the synthesis-based estimate 104is and the warping-based estimate 104ir and/or the refined warping-based estimate 104iwr. In particular, the processor 105 of the device 100 is configured to blend the warping-based estimate 104iw and/or the refined warping-based estimate 104iwr with the synthesis-based estimate 104is based on one or more blending coefficients 1101 determined based on the warping-based estimate 104iw, the synthesis-based estimate 104is, the motion estimate 701 between the first frame 104a and the second frame 104b, and a time between the first frame 104a and the latent intermediate frame.

In particular, this module may blend the synthesis-based estimate 104is and the refined warping-based estimate 104iwr, in order to mitigate artefacts of the individual methods and thus to produce better final result, as shown in FIG. 11. The averaging 404 can handle light and focus changes. The blending coefficients 1101, for use in computing the blending by the processor 105, may be estimated by using an attention network 1100 that takes as an input interpolation results 104iwr and 104is, the motion estimate results 701 and a bi-linear coefficient 1102 (as a channel with value constant across locations), that depends on the position of the intermediate frame 104i.

FIG. 12 shows an example of a training strategy of the modules of the processor 105. In one embodiment, a training of the method/modules as shown in FIG. 4 is performed on a synthetic dataset generated from a conventional video dataset by skipping intermediate frames of a video sequence and generating events 1202 from these using an event simulator 1201, and then trying to reconstruct the missing intermediated frames 1204i as shown. A loss 1203 may be fed back to the video to events conversion , i.e., the event simulator 1201. The four modules of FIG. 4 may be trained one-by-one, while freezing parameters of the other modules, for instance, in the following order: warping-based interpolation 401, synthesis-based interpolation 402, warping refinement 403, and attention averaging 404.

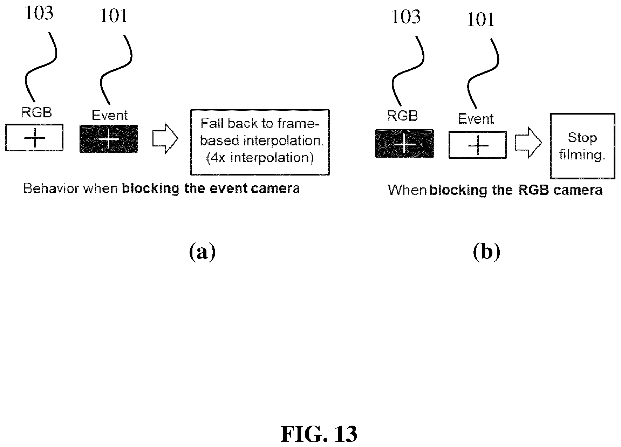

FIG. 13 shows a possible behavior of the device 100 when one of the event sensor 101 and the image sensor 103 is blocked or otherwise unavailable. When the event sensor 101 is unavailable, the device 100 may fall back to a conventional frame-based interpolation with a decreased frame rate. When the image sensor 103 is blocked or otherwise unavailable, the device 100 may stop operating and show error message.

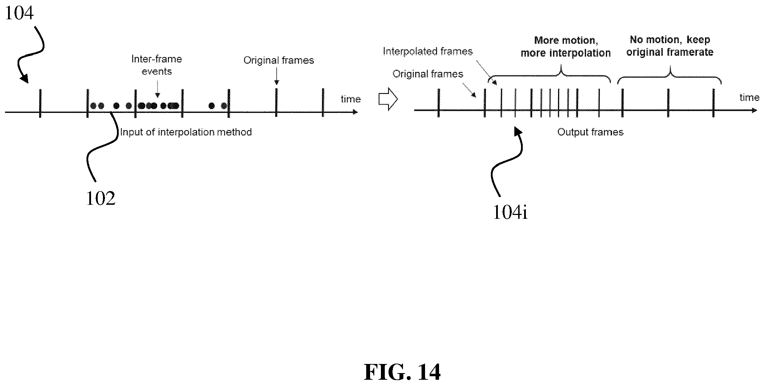

FIG. 14 shows that to save on computations, a frame rate of the interpolated video sequence may depend on the amount of motion between the frames (approximated, for example, by number of events 102e). In the absence of motion, a frame rate may fall back to the frame rate of the image sensor 103 as shown in FIG. 14. The fewer motion, the lower the frame rat, i.e., the fewer intermediate frames 104i are computed between the first frame 104a and the second frame 104b. For instance, the processor 105 of the device 100 may accordingly be configured to determine the number of intermediate frames 104i to compute between the first frame 104a and the second frame 104b based on the motion estimate 701 between the first frame 104a and the second frame 104b.

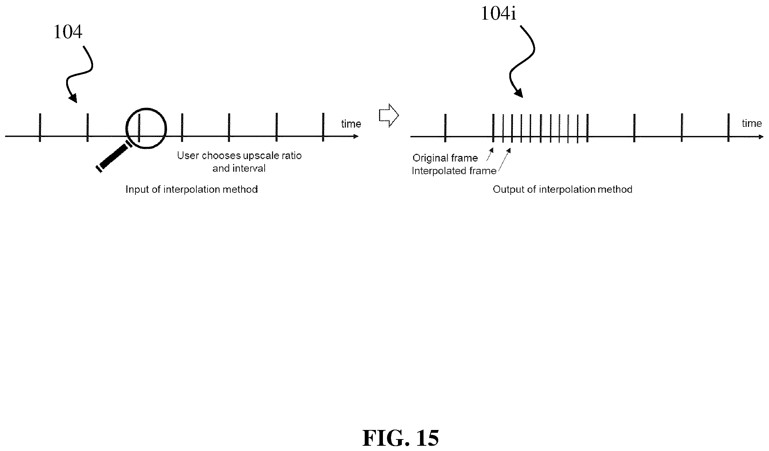

As an alternative, the device 100 may comprise a user interface. The user of the device may be provided with the interface allowing an arbitrary increase frame of any part of the video (temporal lenses) as shown in FIG. 15. That is, the device 100 may be configured to determine number of intermediate frames 104i to compute between the first frame 104a and the second frame 104b based on a user input received by the device 100.

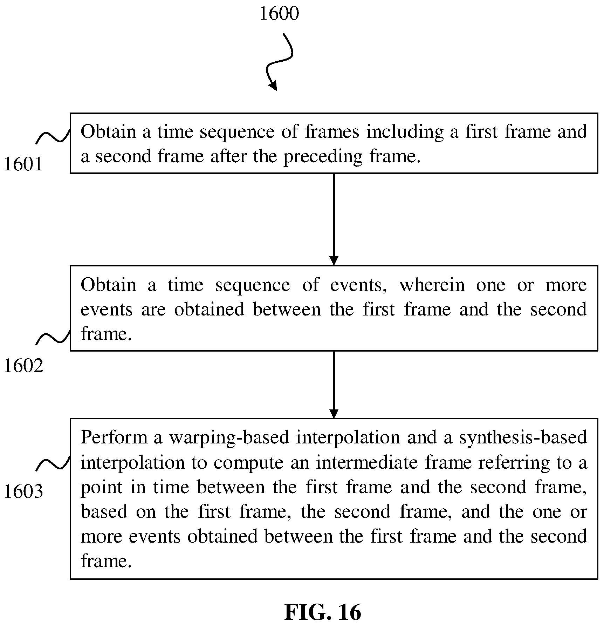

FIG. 16 shows a method 1600 according to an embodiment of the invention. The method is suitable for providing video interpolation, and may be performed by the device 100.

The method 1600 comprises a step 1601 of obtaining a time sequence of frames 104 including a first frame 104a and a second frame 104b obtained after the first frame 104a. Further, it comprises a step 1602 of obtaining a time sequence of events 102, wherein one or more events 102e are obtained between the first frame 104a and the second frame 104b. The obtaining 1602 of the time sequence of frames 104 and the time sequence of events 102 is temporally synchronized and performed for the same field of view. Further, the method 1600 comprises performing a warping-based interpolation and a synthesis-based interpolation for computing 1603 an intermediate frame 104i referring to a point in time between the first frame 104a and the second frame 104b, based on the first frame 104a, the second frame 104b, and the one or more events 102e obtained between the first frame 104a and the second frame 104b.

## Claims

1. A device (100) for providing video interpolation, the device (100) comprising:
an image sensor (103) configured to obtain a time sequence of frames (104) including a first frame (104a) and a second frame (104b) obtained after the first frame (104a);
an event sensor (101) configured to obtain a time sequence of events (102), wherein one or more events (102e) are obtained between the first frame (104a) and the second frame (104b);
wherein the image sensor (103) and the event sensor (101) are temporally synchronized and cover the same field of view; and
a processor (105) configured to combine a warping-based interpolation (401) and a synthesis-based interpolation (402) to compute an intermediate frame (104i) referring to a point in time between the first frame (104a) and the second frame (104b), wherein the intermediate frame (104i) is based on the first frame (104a), the second frame (104b) and the one or more events (102e) obtained between the first frame (104a) and the second frame (104b).

2. The device (100) according to claim 1, wherein the processor (105) is configured to compute the intermediate frame (104i) based further on at least one of:
one or more frames preceding the first frame (104a) in the time sequence of frames (104);
one or more frames following the second frame (104b) in the time sequence of frames (104);
one or more events (102e) in the time sequence of events (102) obtained before the first frame (104a);
one or more events (102e) in the time sequence of events (102) obtained after the second frame (104b).

3. The device (100) according to claim 1 or 2, wherein for computing the intermediate frame (104i) the processor (105) is configured to:
perform the warping-based interpolation (401) to obtain a warping-based estimate (104iw) for the intermediate frame (104i), wherein the warping-based interpolation (401) includes warping the first frame (104a) based on a motion estimate (701) between the first frame (104a) and a latent intermediate frame and warping the second frame (104b) based on a motion estimate (701) between the latent intermediate frame and the second frame (104b), the motion estimates (701) being determined based on the one or more events (102e) obtained between the first frame (104a) and the second frame (104b).

4. The device (100) according to one of the claims 1 to 3, wherein for computing the intermediate frame (104i) the processor (105) is configured to:
perform the synthesis-based interpolation (402) to obtain a synthesis-based estimate (104is) for the intermediate frame (104i), wherein the synthesis-based interpolation (402) includes synthesizing a latent intermediate frame using the first frame (104a), the second frame (104b), and the one or more events (102e) obtained between the first frame (104a) and the second frame (104b).

5. The device (100) according to the claims 3 and 4, wherein for computing the intermediate frame (104i) the processor (105) is configured to:
compute the intermediate frame (104i) based on the warping-based estimate (104iw) and the synthesis-based estimate (104is).

6. The device (100) according to claim 5, wherein for obtaining the intermediate frame (104i) based on the warping-based estimate (104iw) and the synthesis-based estimate (104is) the processor (105) is further configured to:
blend the warping-based estimate (104iw) and/or the refined warping-based estimate (104iwr) with the synthesis-based estimate (104is) based on one or more blending coefficients (1101) determined based on the warping-based estimate (104iw), the synthesis-based estimate (104is), the motion estimate between the first frame (104a) and the second frame (104b), and a time between the first frame (104a) and the latent intermediate frame (104i).

7. The device (100) according to one of the claims 1 to 6, wherein the processor (105) is further configured to:
compute the intermediate frame (104i) based on a frame-based interpolation with a decreased frame rate, if the event sensor (101) is unavailable; and/or
stop all operations and output an error indication, if the image sensor (103) is unavailable.

8. The device (100) according to one of the claims 1 to 7, wherein the processor (105) is further configured to:
compute the intermediate frame (104i) while the image sensor (103) and the event sensor (101) obtain the time sequence of frames (104) and the time sequence of events (102), respectively; and/or
store the obtained time sequence of frames (104) and time sequence of events (102) in a raw file format and compute the intermediate frame (104i) based on the stored raw file format.

9. The device (100) according to one of the claims 1 to 8, wherein the processor (105) is further configured to:
compute a set of intermediate frames (104i) between the first frame (104a) and the second frame (104b), based on the first frame (104a), the second frame (104b), and the one or more events (102e) obtained between the first frame (104a) and the second frame (104b), wherein the processor (105) is further configured to:
determine a number of intermediate frames (104i) in the set of intermediate frame (104i)s based on a motion estimate between the first frame (104a) and the second frame (104b).

10. The device (100) according to claim 9, wherein the processor (105) is further configured to:
determine a number of intermediate frames (104i) in the set of intermediate frames (104i) based on a user input received by the device (100).

11. The device (100) according to one of the claims 1 to 10, wherein the processor (105) is further configured to:
compute one or more intermediate frames (104i) between each two consecutively obtained frames in the time sequence of frames (104).

12. The device (100) according to one of the claims 1 to 11, wherein:
the second frame (104b) directly follows the first frame (104a) in the time sequence of frames (104).

13. The device (100) according to one of the claims 1 to 12, wherein:
the event sensor (101) is integrated with the image sensor (103), or
the event sensor (101) is arranged in a stereo configuration with the image sensor (103), or
the event sensor (101) and the image sensor (103) are coupled to a beam splitter of the device (100).

14. A method (1600) for providing video interpolation, the method (1600) comprising:
obtaining (1601) a time sequence of frames (104) including a first frame (104a) and a second frame (104b) obtained after the first frame (104a);
obtaining (1602) a time sequence of events (102), wherein one or more events (102e) are obtained between the first frame (104a) and the second frame (104b);
wherein the obtaining (1602) of the time sequence of frames (104) and the time sequence of events (102) is temporally synchronized and performed for the same field of view; and
combining (1603) a warping-based interpolation (401) and a synthesis-based interpolation (402) to compute an intermediate frame (104i) referring to a point in time between the first frame (104a) and the second frame (104b), wherein the intermediate frame (104i) is based on the first frame (104a), the second frame (104b), and the one or more events (102e) obtained between the first frame (104a) and the second frame (104b).

15. Computer program comprising a program code for performing the method (1600) according to claim 14, when executed on a computer.

## Patentansprüche

1. Vorrichtung (100) zum Bereitstellen von Videointerpolation, wobei die Vorrichtung (100) Folgendes umfasst:
einen Bildsensor (103), der dazu konfiguriert ist, eine zeitliche Abfolge von Einzelbildern (104) zu erlangen, die ein erstes Einzelbild (104a) und ein zweites Einzelbild (104b), das nach dem ersten Einzelbild (104a) erlangt wird, beinhaltet;
einen Ereignissensor (101), der dazu konfiguriert ist, eine zeitliche Abfolge von Ereignissen (102) zu erlangen, wobei ein oder mehrere Ereignisse (102e) zwischen dem ersten Einzelbild (104a) und dem zweiten Einzelbild (104b) erlangt werden;
wobei der Bildsensor (103) und der Ereignissensor (101) zeitlich synchronisiert sind und dasselbe Sichtfeld abdecken; und
einen Prozessor (105), der dazu konfiguriert ist, eine verformungsbasierte Interpolation (401) und eine synthesebasierte Interpolation (402) zu kombinieren, um ein Zwischeneinzelbild (104i), das sich auf einen Zeitpunkt zwischen dem ersten Einzelbild (104a) und dem zweiten Einzelbild (104b) bezieht, zu berechnen, wobei das Zwischeneinzelbild (104i) auf dem ersten Einzelbild (104a), dem zweiten Einzelbild (104b) und dem einen oder den mehreren Ereignissen (102e), die zwischen dem ersten Einzelbild (104a) und dem zweiten Einzelbild (104b) erlangt werden, basiert.

2. Vorrichtung (100) nach Anspruch 1, wobei der Prozessor (105) dazu konfiguriert ist, das Zwischeneinzelbild (104i) ferner basierend auf mindestens einem der Folgenden zu berechnen:
einem oder mehreren Einzelbildern, die dem ersten Einzelbild (104a) in der zeitlichen Abfolge der Einzelbilder (104) vorangehen;
einem oder mehreren Einzelbildern, die dem zweiten Einzelbild (104b) in der zeitlichen Abfolge der Einzelbilder (104) folgen;
einem oder mehreren Ereignissen (102e) in der zeitlichen Abfolge von Ereignissen (102), die vor dem ersten Einzelbild (104a) erlangt wurden;
einem oder mehreren Ereignissen (102e) in der zeitlichen Abfolge von Ereignissen (102), die nach dem zweiten Einzelbild (104b) erlangt wurden.

3. Vorrichtung (100) nach Anspruch 1 oder 2, wobei der Prozessor (105) zum Berechnen des Zwischeneinzelbilds (104i) zu Folgendem konfiguriert ist:
Durchführen der verformungsbasierten Interpolation (401), um eine verformungsbasierte Schätzung (104iw) für das Zwischeneinzelbild (104i) zu erlangen, wobei die verformungsbasierte Interpolation (401) Verformen des ersten Einzelbilds (104a) basierend auf einer Bewegungsschätzung (701) zwischen dem ersten Einzelbild (104a) und einem latenten Zwischeneinzelbild und Verformen des zweiten Einzelbilds (104b) basierend auf einer Bewegungsschätzung (701) zwischen dem latenten Zwischeneinzelbild und dem zweiten Einzelbild (104b) beinhaltet, wobei die Bewegungsschätzungen (701) basierend auf dem einen oder den mehreren Ereignissen (102e), die zwischen dem ersten Einzelbild (104a) und dem zweiten Einzelbild (104b) erlangt werden, bestimmt werden.

4. Vorrichtung (100) nach einem der Ansprüche 1 bis 3, wobei der Prozessor (105) zum Berechnen des Zwischeneinzelbilds (104i) zu Folgendem konfiguriert ist:
Durchführen der synthesebasierten Interpolation (402), um eine synthesebasierte Schätzung (104is) für das Zwischeneinzelbild (104i) zu erlangen, wobei die synthesebasierte Interpolation (402) Synthetisieren eines latenten Zwischeneinzelbilds unter Verwendung des ersten Einzelbilds (104a), des zweiten Einzelbilds (104b) und des einen oder der mehreren Ereignisse (102e), die zwischen dem ersten Einzelbild (104a) und dem zweiten Einzelbild (104b) erlangt werden, beinhaltet.

5. Vorrichtung (100) nach den Ansprüchen 3 und 4, wobei der Prozessor (105) zum Berechnen des Zwischeneinzelbilds (104i) zu Folgendem konfiguriert ist:
Berechnen des Zwischeneinzelbilds (104i) basierend auf der verformungsbasierten Schätzung (104iw) und der synthesebasierten Schätzung (104is).

6. Vorrichtung (100) nach Anspruch 5, wobei der Prozessor (105) zum Erlangen des Zwischeneinzelbilds (104i) basierend auf der verformungsbasierten Schätzung (104iw) und der synthesebasierten Schätzung (104is) ferner zu Folgendem konfiguriert ist:
Mischen der verformungsbasierten Schätzung (104iw) und/oder der verfeinerten verformungsbasierten Schätzung (104iwr) mit der synthesebasierten Schätzung (104is) basierend auf einem oder mehreren Mischkoeffizienten (1101), die basierend auf der verformungsbasierten Schätzung (104iw), der synthesebasierten Schätzung (104is), der Bewegungsschätzung zwischen dem ersten Einzelbild (104a) und dem zweiten Einzelbild (104b) und einer Zeit zwischen dem ersten Einzelbild (104a) und dem latenten Zwischeneinzelbild (104i) bestimmt werden.

7. Vorrichtung (100) nach einem der Ansprüche 1 bis 6, wobei der Prozessor (105) ferner zu Folgendem konfiguriert ist:
Berechnen des Zwischeneinzelbilds (104i) basierend auf einer einzelbildbasierten Interpolation mit einer verringerten Einzelbildrate, wenn der Ereignissensor (101) nicht verfügbar ist; und/oder
Stoppen aller Vorgänge und Ausgeben einer Fehlermeldung, wenn der Bildsensor (103) nicht verfügbar ist.

8. Vorrichtung (100) nach einem der Ansprüche 1 bis 7, wobei der Prozessor (105) ferner zu Folgendem konfiguriert ist:
Berechnen des Zwischeneinzelbilds (104i), während der Bildsensor (103) und der Ereignissensor (101) die zeitliche Abfolge von Einzelbildern (104) bzw. die zeitliche Abfolge von Ereignissen (102) erlangen; und/oder
Speichern der erlangten zeitlichen Abfolge von Einzelbildern (104) und der zeitlichen Abfolge von Ereignissen (102) in einem Rohdateiformat und Berechnen des Zwischeneinzelbilds (104i) basierend auf dem gespeicherten Rohdateiformat.

9. Vorrichtung (100) nach einem der Ansprüche 1 bis 8, wobei der Prozessor (105) ferner zu Folgendem konfiguriert ist:
Berechnen eines Satzes von Zwischeneinzelbildern (104i) zwischen dem ersten Einzelbild (104a) und dem zweiten Einzelbild (104b), basierend auf dem ersten Einzelbild (104a), dem zweiten Einzelbild (104b) und dem einen oder den mehreren Ereignissen (102e), die zwischen dem ersten Einzelbild (104a) und dem zweiten Einzelbild (104b) erlangt werden, wobei der Prozessor (105) ferner zu Folgendem konfiguriert ist:
Bestimmen einer Anzahl von Zwischeneinzelbildern (104i) in dem Satz von Zwischeneinzelbildern (104i) basierend auf einer Bewegungsschätzung zwischen dem ersten Einzelbild (104a) und dem zweiten Einzelbild (104b).

10. Vorrichtung (100) nach Anspruch 9, wobei der Prozessor (105) ferner zu Folgendem konfiguriert ist:
Bestimmen einer Anzahl von Zwischeneinzelbildern (104i) in dem Satz von Zwischeneinzelbildern (104i) basierend auf einer Benutzereingabe, die von der Vorrichtung (100) empfangen wird.

11. Vorrichtung (100) nach einem der Ansprüche 1 bis 10, wobei der Prozessor (105) ferner zu Folgendem konfiguriert ist:
Berechnen eines oder mehrerer Zwischeneinzelbilder (104i) zwischen jeweils zwei aufeinanderfolgend erlangten Einzelbildern in der zeitlichen Abfolge der Einzelbilder (104) .

12. Vorrichtung (100) nach einem der Ansprüche 1 bis 11, wobei:
das zweite Einzelbild (104b) in der zeitlichen Abfolge der Einzelbilder (104) unmittelbar auf das erste Einzelbild (104a) folgt.

13. Vorrichtung (100) nach einem der Ansprüche 1 bis 12, wobei:
der Ereignissensor (101) in den Bildsensor (103) integriert ist, oder
der Ereignissensor (101) in einer Stereokonfiguration mit dem Bildsensor (103) angeordnet ist, oder
der Ereignissensor (101) und der Bildsensor (103) mit einem Strahlteiler der Vorrichtung (100) gekoppelt sind.

14. Verfahren (1600) zum Bereitstellen von Videointerpolation, wobei das Verfahren (1600) Folgendes umfasst:
Erlangen (1601) einer zeitlichen Abfolge von Einzelbildern (104), die ein erstes Einzelbild (104a) und ein zweites Einzelbild (104b), das nach dem ersten Einzelbild (104a) erlangt wird, beinhaltet;
Erlangen (1602) einer zeitlichen Abfolge von Ereignissen (102), wobei ein oder mehrere Ereignisse (102e) zwischen dem ersten Einzelbild (104a) und dem zweiten Einzelbild (104b) erlangt werden;
wobei das Erlangen (1602) der zeitlichen Abfolge von Einzelbildern (104) und der zeitlichen Abfolge von Ereignissen (102) zeitlich synchronisiert ist und für dasselbe Sichtfeld durchgeführt wird; und
Kombinieren (1603) einer verformungsbasierten Interpolation (401) und einer synthesebasierten Interpolation (402), um ein Zwischeneinzelbild (104i), das sich auf einen Zeitpunkt zwischen dem ersten Einzelbild (104a) und dem zweiten Einzelbild (104b) bezieht, zu berechnen, wobei das Zwischeneinzelbild (104i) auf dem ersten Einzelbild (104a), dem zweiten Einzelbild (104b) und dem einen oder den mehreren Ereignissen (102e), die zwischen dem ersten Einzelbild (104a) und dem zweiten Einzelbild (104b) erlangt werden, basiert.

15. Computerprogramm, umfassend einen Programmcode zum Durchführen des Verfahrens (1600) nach Anspruch 14, wenn es auf einem Computer ausgeführt wird.

## Revendications

1. Dispositif (100) pour fournir une interpolation vidéo, le dispositif (100) comprenant :
un capteur d'images (103) configuré pour obtenir une séquence temporelle de trames (104) comportant une première trame (104a) et une seconde trame (104b) obtenue après la première trame (104a) ;
un capteur d'événements (101) configuré pour obtenir une séquence temporelle d'événements (102), dans lequel un ou plusieurs événements (102e) sont obtenus entre la première trame (104a) et la seconde trame (104b) ;
dans lequel le capteur d'images (103) et le capteur d'événements (101) sont synchronisés temporellement et couvrent le même champ de vision ; et
un processeur (105) configuré pour combiner une interpolation basée sur la déformation (401) et une interpolation basée sur la synthèse (402) pour calculer une trame intermédiaire (104i) faisant référence à un instant entre la première trame (104a) et la seconde trame (104b), dans lequel la trame intermédiaire (104i) est basée sur la première trame (104a), la seconde trame (104b) et les un ou plusieurs événements (102e) obtenus entre la première trame (104a) et la seconde trame (104b).

2. Dispositif (100) selon la revendication 1, dans lequel le processeur (105) est configuré pour calculer la trame intermédiaire (104i) sur la base en outre d'au moins l'un parmi :
une ou plusieurs trames précédant la première trame (104a) dans la séquence temporelle de trames (104) ;
une ou plusieurs trames suivant la seconde trame (104b) dans la séquence temporelle de trames (104) ;
un ou plusieurs événements (102e) dans la séquence temporelle d'événements (102) obtenue avant la première trame (104a) ;
un ou plusieurs événements (102e) dans la séquence temporelle d'événements (102) obtenue après la seconde trame (104b).

3. Dispositif (100) selon la revendication 1 ou 2, dans lequel pour calculer la trame intermédiaire (104i) le processeur (105) est configuré pour :
exécuter l'interpolation basée sur la déformation (401) pour obtenir une estimation basée sur la déformation (104iw) pour la trame intermédiaire (104i), dans lequel l'interpolation basée sur la déformation (401) comporte la déformation de la première trame (104a) sur la base d'une estimation de mouvement (701) entre la première trame (104a) et une trame intermédiaire latente et la déformation de la seconde trame (104b) sur la base d'une estimation de mouvement (701) entre la trame intermédiaire latente et la seconde trame (104b), les estimations de mouvement (701) étant déterminées sur la base des un ou plusieurs événements (102e) obtenus entre la première trame (104a) et la seconde trame (104b).

4. Dispositif (100) selon l'une des revendications 1 à 3, dans lequel pour calculer la trame intermédiaire (104i) le processeur (105) est configuré pour :
exécuter l'interpolation basée sur la synthèse (402) pour obtenir une estimation basée sur la synthèse (104is) pour la trame intermédiaire (104i), dans lequel l'interpolation basée sur la synthèse (402) comporte la synthèse d'une trame intermédiaire latente à l'aide de la première trame (104a), de la seconde trame (104b) et des un ou plusieurs événements (102e) obtenus entre la première trame (104a) et la seconde trame (104b).

5. Dispositif (100) selon les revendications 3 et 4, dans lequel pour calculer la trame intermédiaire (104i) le processeur (105) est configuré pour :
calculer la trame intermédiaire (104i) sur la base de l'estimation basée sur la déformation (104iw) et de l'estimation basée sur la synthèse (104is).

6. Dispositif (100) selon la revendication 5, dans lequel pour obtenir la trame intermédiaire (104i) sur la base de l'estimation basée sur la déformation (104iw) et de l'estimation basée sur la synthèse (104is), le processeur (105) est également configuré pour :
mélanger l'estimation basée sur la déformation (104iw) et/ou l'estimation basée sur la déformation affinée (104iwr) avec l'estimation basée sur la synthèse (104is) sur la base d'un ou de plusieurs coefficients de mélange (1101) déterminés sur la base de l'estimation basée sur la déformation (104iw), l'estimation basée sur la synthèse (104is), l'estimation de mouvement entre la première trame (104a) et la seconde trame (104b), et un temps entre la première trame (104a) et la trame intermédiaire latente (104i).

7. Dispositif (100) selon l'une des revendications 1 à 6, dans lequel le processeur (105) est également configuré pour :
calculer la trame intermédiaire (104i) sur la base d'une interpolation basée sur une trame avec une fréquence de trame réduite, si le capteur d'événements (101) n'est pas disponible ; et/ou
arrêter toutes les opérations et émettre une indication d'erreur, si le capteur d'images (103) n'est pas disponible.

8. Dispositif (100) selon l'une des revendications 1 à 7, dans lequel le processeur (105) est également configuré pour :
calculer la trame intermédiaire (104i) tandis que le capteur d'images (103) et le capteur d'événements (101) obtiennent respectivement la séquence temporelle de trames (104) et la séquence temporelle d'événements (102) ; et/ou
stocker les séquence temporelle de trames (104) et séquence temporelle d'événements (102) obtenues dans un format de fichier brut et calculer la trame intermédiaire (104i) sur la base du format de fichier brut stocké.

9. Dispositif (100) selon l'une des revendications 1 à 8, dans lequel le processeur (105) est également configuré pour :
calculer un ensemble de trames intermédiaires (104i) entre la première trame (104a) et la seconde trame (104b), sur la base de la première trame (104a), de la seconde trame (104b) et des un ou plusieurs événements (102e) obtenus entre la première trame (104a) et la seconde trame (104b), dans lequel le processeur (105) est également configuré pour :
déterminer un nombre de trames intermédiaires (104i) dans l'ensemble de trames intermédiaires (104i) sur la base d'une estimation de mouvement entre la première trame (104a) et la seconde trame (104b).

10. Dispositif (100) selon la revendication 9, dans lequel le processeur (105) est également configuré pour :
déterminer un nombre de trames intermédiaires (104i) dans l'ensemble de trames intermédiaires (104i) sur la base d'une entrée utilisateur reçue par le dispositif (100).

11. Dispositif (100) selon l'une des revendications 1 à 10, dans lequel le processeur (105) est également configuré pour :
calculer une ou plusieurs trames intermédiaires (104i) entre chaque deux trames obtenues consécutivement dans la séquence temporelle de trames (104).

12. Dispositif (100) selon l'une des revendications 1 à 11, dans lequel :
la seconde trame (104b) suit directement la première trame (104a) dans la séquence temporelle de trames (104).

13. Dispositif (100) selon l'une des revendications 1 à 12, dans lequel :
le capteur d'événements (101) est intégré au capteur d'images (103), ou
le capteur d'événements (101) est agencé dans une configuration stéréo avec le capteur d'images (103), ou
le capteur d'événements (101) et le capteur d'images (103) sont couplés à un séparateur de faisceau du dispositif (100).

14. Procédé (1600) pour fournir une interpolation vidéo, le procédé (1600) comprenant :
l'obtention (1601) d'une séquence temporelle de trames (104) comportant une première trame (104a) et une seconde trame (104b) obtenue après la première trame (104a) ;
l'obtention (1602) d'une séquence temporelle d'événements (102), dans lequel un ou plusieurs événements (102e) sont obtenus entre la première trame (104a) et la seconde trame (104b) ;
dans lequel l'obtention (1602) de la séquence temporelle de trames (104) et de la séquence temporelle d'événements (102) est synchronisée temporellement et exécutée pour le même champ de vision ; et
la combinaison (1603) d'une interpolation basée sur la déformation (401) et d'une interpolation basée sur la synthèse (402) pour calculer une trame intermédiaire (104i) faisant référence à un instant entre la première trame (104a) et la seconde trame (104b), dans lequel la trame intermédiaire (104i) est basée sur la première trame (104a), la seconde trame (104b) et les un ou plusieurs événements (102e) obtenus entre la première trame (104a) et la seconde trame (104b).

15. Programme informatique comprenant un code de programme pour exécuter le procédé (1600) selon la revendication 14, lorsqu'il est exécuté sur un ordinateur.
